Europäisches Patentamt

European Patent Office

Office européen des brevets

(11) Veröffentlichungsnummer: **0 198 164**
**B1**

(12) **EUROPÄISCHE PATENTSCHRIFT**

(45) Veröffentlichungstag der Patentschrift:
**04.01.89**

(21) Anmeldenummer: **86101497.5**

(22) Anmeldetag: **05.02.86**

(51) Int. Cl.⁴: **B 01 D 25/24**

(54) **Flüssigkeitsfilter.**

(30) Priorität: **12.04.85 DE 3513062**

(43) Veröffentlichungstag der Anmeldung:
**22.10.86 Patentblatt 86/43**

(45) Bekanntmachung des Hinweises auf die Patenterteilung:
**04.01.89 Patentblatt 89/1**

(84) Benannte Vertragsstaaten:
**AT BE CH DE FR GB IT LI LU NL SE**

(56) Entgegenhaltungen:
**FR-A-2 104 075**
**FR-A-2 427 123**
**US-A-3 849 314**

(73) Patentinhaber: **REHAU AG + Co, Rheniumhaus, D-8673 Rehau (DE)**

(72) Erfinder: **Der Erfinder hat auf seine Nennung verzichtet**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft einen Flüssigkeitsfilter mit einem Filtergehäuse, bestehend aus zwei miteinander verbundenen, auf einen hülsenartigen Kern aufgewickelten Filterbahnen, wobei die untere Filterbahn mit quer zur Längsrichtung verlaufenden, rillenartigen Vertiefungen ausgestattet ist, während die obere Filterbahn zur Bildung eines V-förmigen, einseitig für den Flüssigkeitseintritt offenen, gewickelten Filterstreifens an der unteren Filterbahn festgelegt und der solcherart gebildete Flüssigkeitsfilter partiell an inneren Wandbereichen des Filtergehäuses befestigt ist.

Aus der DE-C-2 039 482 ist ein solcher Flüssigkeitsfilter bekannt geworden. Der dort beschriebene Filter besteht aus einem spiralig gewickelten, über seine ganze Länge einen V-förmigen Querschnitt aufweisenden Filterpapierstreifen, bei dem die Ränder benachbarter Lagen an der offenen Seite des Filterpapierstreifens dichtend miteinander verbunden sind, so daß zwei spiralförmig ineinandergefügte, von entgegengesetzten Seiten zugängliche Räume im Wickel entstehen. Der Filter-Papierstreifen weist quer zur Längsrichtung verlaufende, rillenartige Vertiefungen auf, welche den Längenausgleich beim spiraligen Aufwickeln übernehmen. Diese rillenartigen Vertiefungen sind nach dem bekannten Stand der Technik in einem Bereich angeordnet, der einen Schenkel des V-förmigen Querschnitts bildet, wobei der den anderen Schenkel bildende Bereich des Filterpapierstreifens im wesentlichen keine derartigen Vertiefungen aufweist. Der bekannte Flüssigkeitsfilter besteht also aus zwei an einer Längskante miteinander verbundenen Filterbahnen, wobei die untere Filterbahn die rillenartigen Vertiefungen aufweist und die obere Filterbahn plan gehalten ist.

Der solcherart gestaltete Wickelfilter wird in einem Filtergehäuse derart eingesetzt, daß die eine Stirnseite mit einen Flüssigkeitszulauf und die andere Stirnseite zu einem Flüssigkeitsrücklauf Verbindung hat.

Der bekannte Flüssigkeitsfilter hat den Vorteil, daß Klebestellen gegenüber vergleichbaren Filterelementen eingespart werden und somit eine einfachere und sicherere Fertigung ermöglicht wird. Nachteilig an dieser bekannten Filterart ist jedoch, daß die planebene Filterbahn an den Klebestellen mit der gewellten Filterbahn verbunden wird. Hierbei kommt es lediglich zu einer linienförmigen Verklebung zwischen beiden Filterbahnen im Bereich der Wellenberge, während die Verbindung von diesen Linien in die Wellentäler und zurück zur nächsten linienartigen Verklebung unsicher ist. Dieser Nachteil kann zu einer Lösung der Klebestellen führen, wodurch die Wirksamkeit des Flüssigkeitsfilters beeinträchtigt wird.

Hier setzt die Erfindung ein, die es sich zur Aufgabe gestellt hat, bei derartigen Flüssigkeitsfiltern eine einwandfreie, flächige Verklebung an den Klebestellen anzugeben, sowie eine vereinfachte Festlegung des solcherart erzeugten Flüssigkeitsfilters im Filtergehäuse. Erfindungsgemäß wird dazu vorgeschlagen, daß die rillenartigen Vertiefungen unter Bildung ungerillter, planer Randstreifen in definiertem Abstand von den Rändern der unteren Filterbahn enden, daß der dem Flüssigkeitseintritt gegenüberliegende Randstreifen der unteren Filterbahn längsverlaufend oben mit einem klebenden Stoff belegt ist, über den eine durchgehende Verklebung mit dem Randbereich der zugeordneten oberen Filterbahn erfolgt, und daß der klebende Stoff längsverlaufend am unteren Randbereich der der unteren Filterbahn gegenüberliegenden Außenseite der oberen Filterbahn angeordnet ist, so daß beim Wickeln der beiden Filterbahnen jeweils ein um 180° versetztes, durchgehendes Verkleben der Filterbahnen an den Randstreifen erfolgt.

Es hat sich als vorteilhaft erwiesen, daß die rillenartigen Vertiefungen - ausgehend von einem Niveau Null der Mitte (M) der unteren Filterbahn - in Richtung einander zugeordneter, verklebter, unterer und oberer Filterbahnen hin als konische Eindrückungen und in entgegengesetzter Richtung zum Flüssigkeitseintritt hin als konische Erhöhungen verlaufen.

Der erfindungsgemäße Flüssigkeitsfilter ermöglicht durch die planebenen Randstreifen oberhalb der rillenartigen Vertiefungen eine durchgehende Verklebung der Filterbahnen in den Randbereichen. Durch die ebenen Anlageflächen wird also eine durchgehende, planebene Verklebung ermöglicht. Damit lassen sich Fehlstellen bei der Verklebung, die zu einer Erniedrigung des Wirkungsgrades des Flüssigkeitsfilters führen können, absolut vermeiden.

Der erfindungsgemäße Flüssigkeitsfilter ist als Wickelfilter ausgebildet und mit seinen um jeweils 180° versetzten Randverklebungen bildet er zusammen mit dem hülsenartigen Kern eine geschlossene Einheit.

Bei der Herstellung werden die Stirnseiten der inneren Filterbahnen quer zur Wickelrichtung mit dem hülsenartigen Kern verklebt. Die weitere Verklebung der Filterbahnen erfolgt erfindungsgemäß in der Form, daß ein V-förmiges Filterelement entsteht, welches an den Klebestellen durchgehend und planeben miteinander verbunden ist. Die V-förmige Ausbildung wird durch die um jeweils 180° versetzten Klebeflächen an den Filterbahnen erzielt.

Die unterschiedliche Umfangslänge zwischen den beiden einen Filterabschnitt bildenden Filterbahnen wird durch die getrennte Ausführung der Filterbahnen und deren Verklebung beim Einlauf in die Wickeleinrichtung ausgeglichen. Auf diese Weise wird ein spannungsfreier und parallel laufender Wickelaufbau erreicht.

Die erfindungsgemäß eingebrachten rillenartigen Vertiefungen dienen dazu, um den Abstand der Filterbahnen untereinander zu definieren. Die rillenartigen Vertiefungen können in die betreffenden Filterbahnen vor der Verklebung miteinander im Durchlauf durch entsprechende mechanische Einrichtungen erzeugt werden.

Der auf diese Weise erzeugte Wickelfilter wird erfindungsgemäß an einer Stirnseite mit einer Abdeckplatte versehen, welche über den Wicklungen Eintrittsöffnungen für die Flüssigkeit aufweist und mit den äußeren Randbereichen der Wicklungen sowie dem über die Wicklungen hinausragenden hülsenartigen Kern in den Anlagebereichen flüssigkeitsdicht verbunden ist. Gleichzeitig werden die Bahnenden quer zur Wickelrichtung miteinander verklebt. Die Anordnung der Abdeckplatte an der einen Stirnseite des Wickelfilters hat den Vorteil, daß ein flüssigkeitsdichter Verbund zwischen dem Wickelfilter und der Abdeckplatte hergestellt wird.

Dadurch wird die nach dem bekannten Stand der Technik erforderliche Verklebung der äußeren Filterbahnen mit der Innenfläche des Filtergehäuses vermieden. Der Nachteil der direkten Verklebungen der äußeren Bahnen des Wickelfilters mit der Innenwand des Filtergehäuses ist darin zu sehen, daß ein erheblicher Aufwand an Klebemitteln erforderlich war, um die vollflächige Verklebung zu gewährleisten. Darüber hinaus konnte Klebemittel über den oberen und unteren Rand des Wickelfilters hinausquellen und Wicklungen zusetzen, wodurch der Wirkungsgrad des Flüssigkeitsfilters negativ beeinträchtigt wurde.

Durch die erfindungsgemäße Anordnung des Wickelfilters im Bereich der Abdeckplatte, wobei der Wickelfilter mit den äußeren oberen Randbereichen flüssigkeitsdicht mit der Abdeckplatte verbunden ist und die Abdeckplatte an dem über den Wickelfilter hinausstehenden Ende des hülsenartigen Kerns ebenfalls flüssigkeitsdicht festgelegt ist, wird durch Wickelfilter und Abdeckplatte eine Einheit gebildet, die einfach und leicht im Inneren des Filtergehäuses festgelegt werden kann.

Die Verbindung der Einheit Abdeckplatte-Wickelfilter mit dem Filtergehäuse erfolgt denkbar einfach. Besteht beispielsweise die Abdeckplatte und das Filtergehäuse aus einem verschweißbaren Kunststoff, dann kann diese Verbindung durch Verschweißen an den Verbindungsstellen geschehen. Hierbei wird die Abdeckplatte mit dem Filtergehäuse unter Bildung von Öffnungen für den Flüssigkeitseintritt und dem Flüssigkeitsaustritt flüssigkeitsdicht miteinander verschweißt.

Werden nicht verschweißbare Materialien bei Abdeckplatte und Filtergehäuse verwendet, so kann die flüssigkeitsdichte Verbindung durch Verschraubung der beiden Elemente nach Einlegung von Dichtelementen wie Dichtringen usw. in den untereinander abzudichtenden Bereichen erfolgen.

In der Zeichnung sind schematische Ausführungsbeispiele des erfindungsgemäßen Flüssigkeitsfilters und dessen Einbringung in das Filtergehäuse schematisch dargestellt; es zeigt:

Fig. 1 das Zusammenfügen der Filterbahnen bei der Herstellung des Wickelfilters.

Fig. 2 einen Schnitt längs der Linie A - A durch den Wickelfilter nach Fig. 1 mit einseitig montierter Abdeckplatte.

Fig. 3 das Filtergehäuse mit eingesetzter Einheit Abdeckplatte-Wickelfilter im Teilschnitt.

Fig. 4 eine Darstellung gemäß Fig. 1 mit anderen rillenartigen Vertiefungen.

Fig. 5 eine Schnittdarstellung gemäß Fig. 3 mit im unteren Bereich eingesetzter Filterheizung.

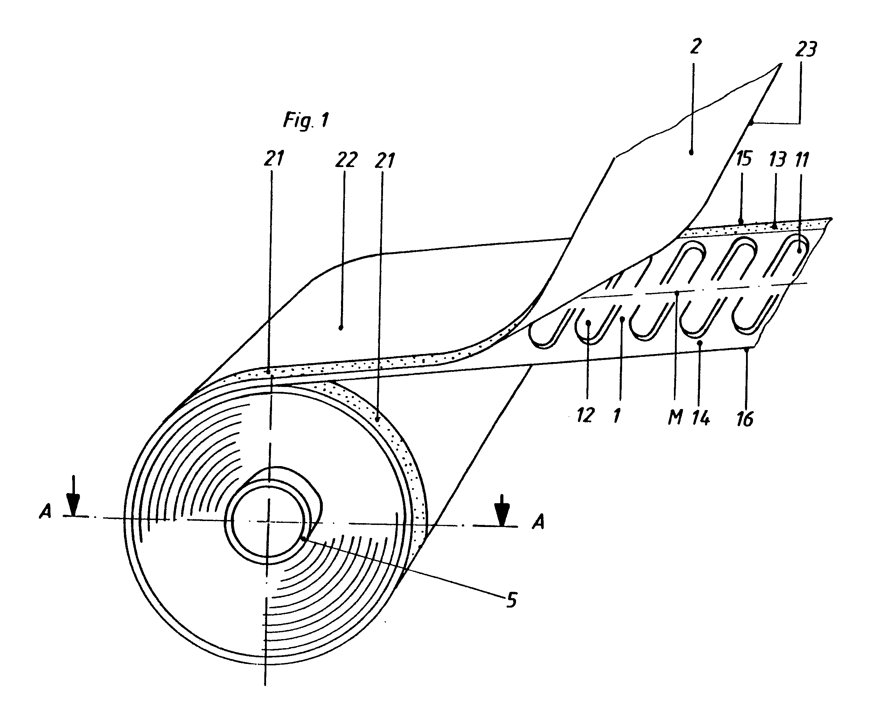

Die in Fig. 1 gezeigte Herstellung des Wickelfilters gemäß der Erfindung zeigt in einem Teilbereich die noch nicht miteinander verbundenen Filterbahnen 1, 2, wobei die untere Filterbahn 1 die rillenartigen Vertiefungen 11, 12, aufweist. Die rillenartigen Vertiefungen 11, 12 verlaufen von der Mitte M quer zur Wickelrichtung bis in die Bereiche der äußeren Ränder 15, 16. Die rillenartigen Vertiefungen 11, 12 enden vor Erreichen der Ränder 15, 16 in der Weise, daß ein jeweils durchgehender, planebener Randstreifen, 13, 14 verbleibt.

Die rillenartigen Vertiefungen 11, 12 sind derart in der unteren Filterbahn angeordnet, daß die von der Mitte M nach oben verlaufenden Vertiefungen als Eindrückungen 11 und die von der Mitte M nach unten verlaufenden als Erhöhungen 12 ausgebildet sind. Sowohl die Eindrückungen 11 als auch die Erhöhungen 12 sind konisch ausgebildet, insofern, als sie von der Mitte M ausgehend von der Ebene der unteren Filterbahn 1 verlaufend entweder als Eindrückungen oder Erhöhungen ausgebildet sind. Dies bedeutet, daß die Eindrückungen 11 vom Niveau 0 der Mitte M an gerechnet in der Tiefe der Eindrückungen bis zu ihren Enden in den Bereichen der Randstreifen 13 zunehmen. Umgekehrt nehmen die Erhöhungen 12 vom Niveau 0 der Mitte an nach unten bis in den Bereich des Randstreifens 14 an Höhe zu.

Der Randstreifen 13 ist in der gezeigten Darstellung mit dem klebenden Stoff durchgehend versehen. Bei der Zusammenfügung der unteren Filterbahn 1 mit der oberen Filterbahn 2 können beide im Bereich des Randstreifens 13 durchgehend und planeben miteinander verklebt werden, da die Eindrückungen 11 eine plane Auflage der oberen Filterbahn 2 auf der unteren Filterbahn 1 von der Mitte M an zulassen. Dies garantiert eine absolut saubere und durchgehende Verklebung der beiden Filterbahnen 1, 2 im Bereich des Randstreifens 13 miteinander.

Auf der anderen Seite schaffen die Erhöhungen 12 eine Filteröffnung für den Eintritt der zu filternden Flüssigkeit, in dem sie als Abstandhalter zwischen der unteren Filterbahn 1 und der oberen Filterbahn 2 zunehmend verstärkt bis zum Randstreifen 14 wirken.

Auf der Außenseite 22 der oberen Filterbahn 2 ist der Randstreifen 21 mit dem klebenden Stoff belegt. Der andere Randbereich 23 besitzt keinen Klebstoffauftrag. Bei der Aufwicklung der beiden Filterbahnen 1, 2 und damit bei der Herstellung des Wickelfilters kommt die Unterseite des Randstreifens 14 der unteren Filterbahn 1 mit dem Randstreifen 21 auf der Außenseite 22 der oberen Filterbahn in Berührung und schafft auf diese Weise eine durchgehende Verklebung. Auch diese Verklebung besitzt die Vorteile der oben geschilderten Verklebungsart der Filterbahnen 1, 2 im Bereich des Randstreifens 13 der unteren Filterbahn 1. Die in der Ansicht gezeigten Erhöhungen 12 in der unteren Hälfte der Filterbahn 1 wirken auf der nicht gezeigten, gegenüberliegenden Außenseite der Filterbahn 1 ihrerseits als Vertiefungen, so daß von dort aus gesehen von der Mitte M aus verlaufend bis zum Randstreifen 14 eine planebene Auflage der unteren Filterbahn 1 beim Wickeln auf der Außenseite 22 der oberen Filterbahn 2 im Bereich des mit dem Klebstoff versehenen Randstreifens 21 möglich ist.

Auf diese geschilderte Weise wird während des Wickelvorgangs das jeweils um 180° versetzte, durchgehende Verkleben der Filterbahnen 1, 2 an den Randstreifen 13, 21 bewirkt. Dadurch ergibt sich im Umkehrschluß bei dem Wickelfilter eine jeweils um 180° versetzte Eintrittsöffnung für die zu filternde Flüssigkeit.

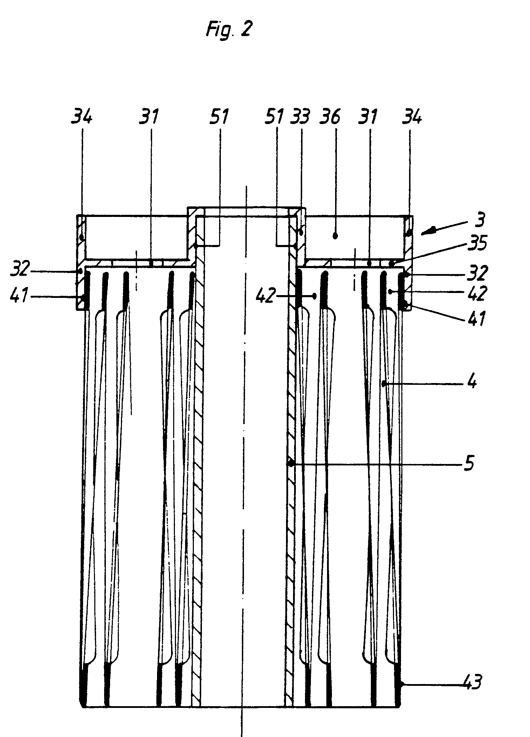

Der in Fig. 2 gezeigte Schnitt längs der Linie A - A durch den Wickelfilter nach Fig. 1 ist mit der einseitig montierten Abdeckplatte 3 dargestellt. In dieser Schnittdarstellung sind bei den einzelnen Wicklungen 4 des Wickelfilters die Eintrittsöffnungen 42 und die Klebestellen 43 in ihrer jeweils um 180° versetzten Ausbildung deutlich zu sehen. Der Anfang der Wicklungen 4 ist bei 41 mit einem umlaufenden Seitenflansch 32 der Abdeckplatte 3 flüssigkeitsdicht verbunden. Nach innen zum hülsenartigen Kern 5 ist die Abdeckplatte 3 über den Flansch 33 im Anlagebereich 51 ebenfalls flüssigkeitsdicht mit dem Kern 5 verbunden. Der umlaufende Flansch 34 der Abdeckplatte 3 schafft mit seinem über die Basis 35 hinausragenden Rand zusammen mit dem umlaufenden Flansch 33 einen umlaufenden, ringförmigen Aufnahmeraum 36, welcher über Eintrittsöffnungen 31 mit den Wicklungen 4 des Flüssigkeitsfilters verbunden ist. Im Innenbereich 42 der Filterbahnen 4 sind diese mit dem hülsenartigen Kern 5 an dessen Außenseite durch Verkleben festgelegt.

Die auf diese Weise geschaffene, flüssigkeitsdichte Einheit zwischen der Abdeckplatte 3 und den Wicklungen 4 mit dem hülsenartigen Kern 5 ergibt einen Filtereinsatz für ein Filtergehäuse, der in seinen wesentlichen Bestandteilen flüssigkeitsdicht vormontiert ist und durch einfache Montage in dem Filtergehäuse festgelegt werden kann.

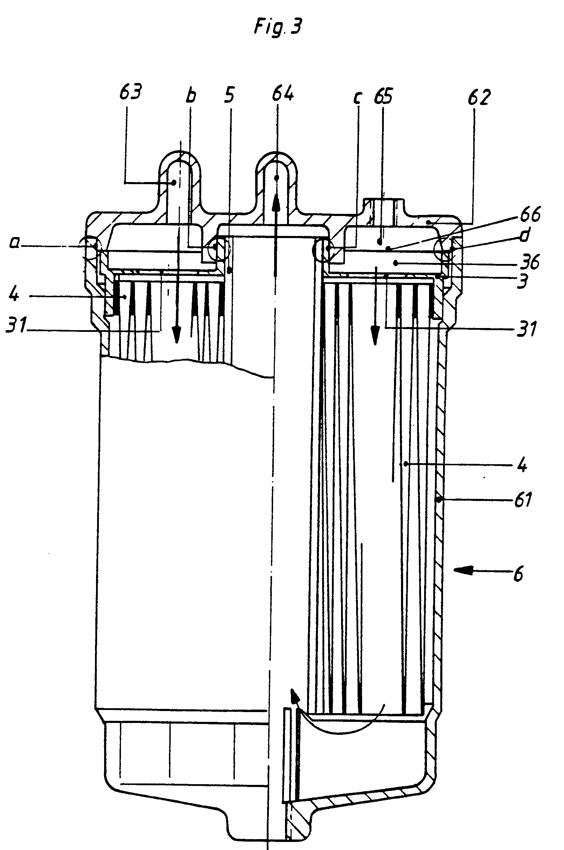

Fig. 3 zeigt das Filtergehäuse 6 mit der eingebauten Einheit Abdeckplatte 3 - Wicklungen 4. Das Filtergehäuse 6 besteht aus einem Gehäusekörper 61 und einem Deckel 62. In dem Deckel 62 ist eine Öffnung 63 für den Flüssigkeitseintritt und im unteren Bereich des Gehäusekörpers 61 ist eine Öffnung 64 für den Flüssigkeitsaustritt angeordnet. Gehäusekörper 61 und Gehäusedeckel 62 bilden im Bereich des Gehäusedeckels 62 einen ringförmigen Kanal 66, welcher durch den ringförmigen Bereich 36 in der Abdeckplatte 3 und den ringförmigen Bereich 65 im Gehäusedeckel 62 gebildet wird. In diesen Kanal 66 wird die zu filternde Flüssigkeit über die Öffnung 63 eingebracht, bevor sie durch die Eintrittsöffnungen 31 in den Bereich der Wicklungen 4 eintritt und gefiltert wird. Die gefilterte Flüssigkeit verläßt dann das Filtergehäuse 6 durch die Öffnung 64.

Die Verbindung von Gehäusekörper 61 und Gehäusedeckel 62 kann durch umlaufende Verschweißung in den Bereichen a, b, c, d erfolgen. Auf diese Weise läßt sich eine flüssigkeitsdichte Einheit zwischen Filtergehäuse 6, Gehäusedeckel 62 und Filterwicklungen 4 erreichen. Der Montageaufwand ist bei einem solchen Aufbau denkbar gering, was sich vorteilhaft auf die Kostensituation bei der Herstellung eines solchen Flüssigkeitsfilters auswirkt.

Anstelle der Verschweißung kann bei der Herstellung der geschilderten Verbindungen auch eine Verklebung erfolgen. Hierbei können Gehäusekörper 61, Gehäusedeckel 62 und Abdeckplatte 3 ebenfalls aus gleichen, jedoch auch aus unterschiedlichen Materialien hergestellt sein.

Neben den Verbindungsarten Verschweißen und Verkleben, die auch untereinander kombiniert sein können, ist auch eine Schraubverbindung zwischen den einzelnen Teilbereichen möglich. In diesem Fall werden die Abdeckplatte 3 mit den Wicklungen 4 und dem hülsenartigen Kern 5 zu einer flüssigkeitsdichten Einheit verbunden. Diese Einheit wird dann in den Gehäusekörper 61 des Filtergehäuses 6 eingesetzt. Der Gehäusekörper 61 kann dabei in seinen oberen Bereichen ein ringsum laufendes, nach außen gerichtetes Schraubgewinde aufweisen, welches von einem inneren Schraubgewinde des Gehäusedeckels 62 übergriffen wird. Bei der Herstellung einer solchen Schraubverbindung müssen dann die einzelnen Bereiche, in denen der Gehäusedeckel 62 am Gehäusekörper bzw. an der Abdeckplatte anliegt, durch entsprechende Dichtungen gesichert sein.

Diese Dichtungen werden bei der Herstellung der Schraubverbindung miteinander verpreßt und bilden so die flüssigkeitsdichte Verbindung zwischen Gehäusedeckel 62, Gehäusekörper 61 und Abdeckplatte 3.

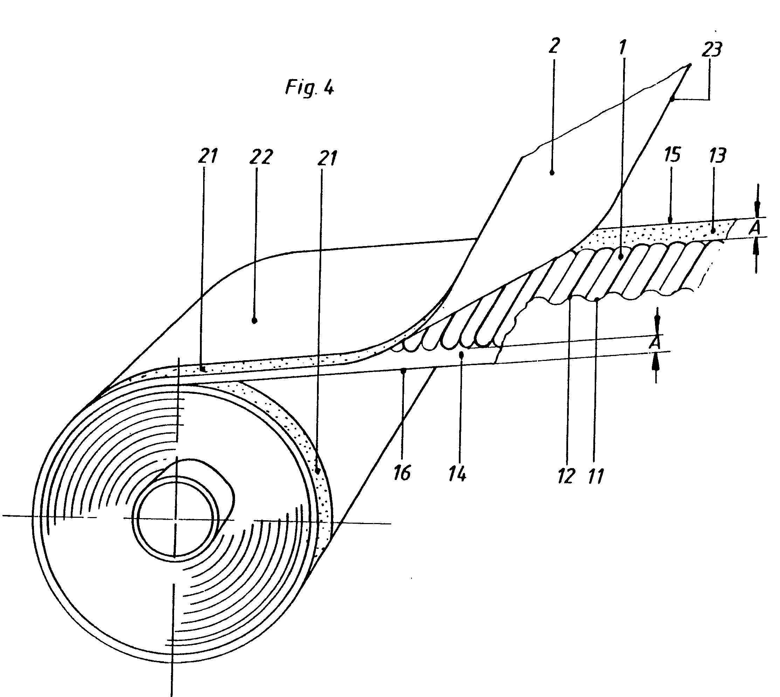

Fig. 4 zeigt noch die Darstellung gemäß Fig. 1 mit anderen rillenartigen Vertiefungen 11, 12. Gleiche Elemente haben hierbei gleiche Bezeichnungen erhalten wie in Fig. 1. Der wesentliche Unterschied zu der Darstellung in Fig. 1 ist hier darin zu sehen, daß die rillenartigen Vertiefungen nicht versetzt von der Mitte M der unteren Filterbahn 1 ausgehen, sondern daß hier eine regelmäßige Wellung der unteren Filterbahn 1 dargestellt ist, deren einzelne Wellungen vor den Randstreifen 13, 14 enden. Die einzelnen Wellungen 11, 12 verlaufen dabei zu den Randstreifen 13, 14 in einer Form, daß die planebene Verklebung des Randes 23 der oberen Filterbahn 2 mit dem den klebenden Stoff tragenden Randstreifen 13 der unteren Filterbahn 1 möglich ist. Das gleiche Prinzip gilt bei der um 180° versetzten Verklebung des Randstreifens 21 mit den entgegengesetzten Randbereichen 16 der unteren Filterbahn 1.

Die Randstreifen 13, 14 weisen in der gezeigten Darstellung einen definierten Abstand A von den äußeren Rändern 15, 16 der unteren Filterbahn 1 auf. Dieser definierte Abstand A garantiert zusammen mit dem Auslaufen der Wellungen 11, 12 zu den Randstreifen 13, 14, daß bei der Verklebung der Filterbahnen 1, 2 die gewünschte flächige Auflage im Bereich der Längsverklebungen erfolgt.

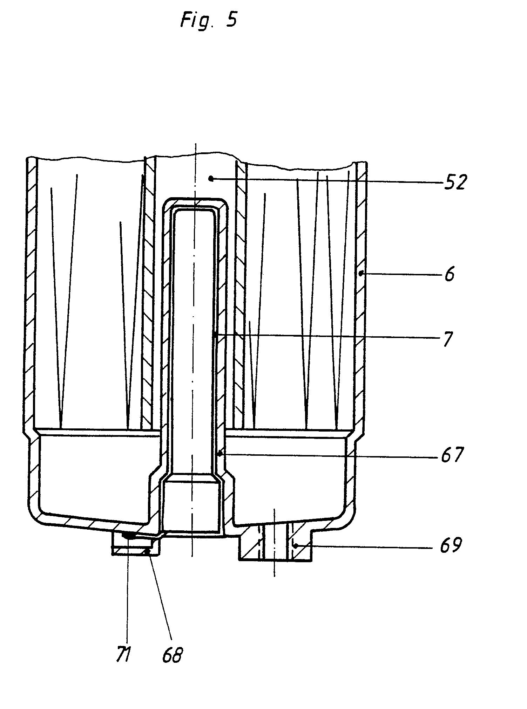

In Fig. 5 ist die untere Hälfte des in Fig. 3 dargestellten Filtergehäuses 6 mit eingesetzter Filterheizung 7 gezeigt. Die Filterheizung 7 ist in einer Rohrhülse 67 eingesetzt, welche beim Spritzgießen des Filtergehäuses 6 ausgeformt wird.

Die Filterheizung 7 kann als festsitzendes Heizelement beim Vorgang des Spritzgießens des Filtergehäuses 6 direkt eingespritzt werden, wobei der Heizelementanschluß 71 in eine als Anschlußstecker 68 ausgebildete Aufnahmeöffnung hineinragen kann. Andere bekannte Anschlußarten liegen im Berreich dieses Erfindungsbestandteils.

Es besteht auch die Möglichkeit, zunächst die Rohrhülse 67 mit dem Filtergehäuse 6 zusammen auszuspritzen und die Filterheizung 7 nachträglich in die Rohrhülse 67 einzuführen. Auf diese Weise kann eine auswechselbare Filterheizung 7 geschaffen werden.

Wesentlich bei der erfindungsgemäßen Filterheizung 7 ist, daß diese in den lichten Freiraum 52 des Kerns 5 derart hineinragt, daß zwischen der Innenwandung des Kerns und der Außenwandung der Filterheizung 7 noch ein genügend großer Ringspalt nach oben durchgehend verbleibt, durch den die zu filternde Flüssigkeit hindurchtreten kann. Um die Filterheizung 7 in diesem Sinne optimal einsetzen zu können, ist die Wasserablauföffnung 69 des Filtergehäuses 6 zur Mitte hin versetzt in dem Filtergehäuse 6 angeordnet worden. Weiterhin wesentlich ist das Merkmal, daß die Filterheizung 7 von außen über den Heizelementanschluß 71 beheizt werden kann, ohne daß die Wandung des Filtergehäuses 6 durchbrochen werden müßte. Auf diese Weise wird die Problematik der Abdichtung einer Durchführung ins Innere des Filtergehäuses umgangen.

## Patentansprüche

1. Flüssigkeitsfilter mit einem Filtergehäuse (6), bestehend aus zwei miteinander verbundenen, auf einem hülsenartigen Kern (5) aufgewickelten Filterbahnen (1, 2), wobei die untere Filterbahn (1) mit quer zur Längsrichtung verlaufenden, rillenartigen Vertiefungen (11, 12) ausgestattet ist, während die obere Filterbahn (2) zur Bildung eines V-förmigen, einseitig für den Flüssigkeitseintritt offenen, gewickelten Filterstreifens an der unteren Filterbahn (1) festgelegt und der solcherart gebildete Flüssigkeitsfilter partiell an inneren Wandbereichen (41, 51) des Filtergehäuses (6) befestigt ist, dadurch gekennzeichnet, daß die rillenartigen Vertiefungen (11, 12) unter Bildung ungerillter, planer Randstreifen (13, 14) in definiertem Abstand (A) von den Rändern (15, 16) der unteren Filterbahn (1) enden, daß der dem Flüssigkeitseintritt gegenüberliegende Randstreifen (13) der unteren Filterbahn (1) längsverlaufend oben mit einem klebenden Stoff belegt ist, über den eine durchgehende Verklebung mit dem Randbereich (23) der zugeordneten oberen Filterbahn (2) erfolgt, und daß der klebende Stoff längsverlaufend am unteren Randbereich (21) der der unteren Filterbahn (1) gegenüberliegenden Außenseite (22) der oberen Filterbahn (2) angeordnet ist, so daß beim Wickeln der beiden Filterbahnen (1, 2) jeweils ein um 180° versetztes, durchgehendes Verkleben der Filterbahnen (1, 2) an den Randstreifen (13, 21) erfolgt.

2. Flüssigkeitsfilter nach Anspruch 1, dadurch gekennzeichnet, daß die rillenartigen Vertiefungen (11, 12) - ausgehend von einem Niveau Null der Mitte (M) der unteren Filterbahn (1) - in Richtung einander zugeordneter, verklebter, unterer und oberer Filterbahnen (1, 2) hin als konische Eindrückungen (11) und in entgegengesetzer Richtung zum Flüssigkeitseintritt hin als konische Erhöhungen (12) verlaufen.

3. Flüssigkeitsfilter nach Anspruch 1, dadurch gekennzeichnet, daß die gewickelten Filterbahnen (1, 2) an einer Stirnseite mit einer Abdeckplatte (3) versehen sind, welche über den Wicklungen (4) Eintrittsöffnungen (31) für die Flüssigkeit aufweist und mit den äußeren Randbereichen (41) der Wicklungen (4) sowie dem über die Wicklungen (4) hinausragenden Kern (5) in dessen Anlagebereichen (51) flüssigkeitsdicht verbunden sind.

4. Flüssigkeitsfilter nach Ansprüchen 1 und 2, dadurch gekennzeichnet, daß die mit der Abdeckplatte (3) verbundenen Wicklungen (4) in ein Filtergehäuse (6) eingesetzt sind, und daß die Abdeckplatte (3) mit dem Filtergehäuse (6) unter Bildung von Öffnungen (63, 64) für den Flüssigkeitseintritt und den Flüssigkeitsaustritt flüssigkeitsdicht miteinander verbunden sind.

5. Flüssigkeitsfilter nach Anspruch 4, dadurch gekennzeichnet, daß die Abdeckplatte (3) und das Filtergehäuse (6) aus verschweißbarem Kunststoff geformt sind.

6. Flüssigkeitsfilter nach Ansprüchen 4 und 5, dadurch gekennzeichnet, daß in dem Filtergehäuse (6) eine einseitig nach außen offene Rohrhülse (67) ausgeformt ist, in deren lichten Querschnitt von außen eine Filterheizung (7) mit einem Heizelementanschluß (71) eigesetzt ist.

## Claims

1. Liquid filter having a filter housing (6) consisting of two filter webs (1, 2) which are connected to one another and wound on a sleeve-like core (5), the lower filter web (1) being equipped with groove-like indentations (11, 12) running transversely to the longitudinal direction while, in order to form a V-shaped wound filter strip open on one side for the entrance of liquid, the upper filter web (2) is fixed to the lower filter web (1) and the liquid filter formed in this manner is partially fastened to the inner wall regions (41, 51) of the filter housing (6), characterized in that the groove-like indentations (11, 12) end at a defined distance (A) from the edges (15, 16) of the lower filter web (1) with formation of planar edge strips (13, 14) without grooves, that that edge strip (13) of the lower filter web (1) which is opposite the liquid inlet is coated on top, in the longitudinal direction, with an adhesive substance which forms a continuous adhesive bond with the edge region (23) of the associated upper filter web (2), and that the adhesive substance is arranged in the longitudinal direction on the lower edge region (21) of the outer side (22) of the upper filter web (2), which outer side is opposite the lower filter web (1), in such a way that continuous adhesive bonding of the filter webs (1, 2) at the edge strips (13, 21) takes place during winding of the two filter webs (1, 2), the said bond being displaced in each case by 180°.

2. Liquid filter according to Claim 1, characterized in that the groove-like indentations (11, 12) - starting from a level zero in the middle (M) of the lower filter web (1) - run in the form of conical indentations (11) towards adhesively bonded, lower and upper filter webs (1, 2) associated with one another and in the form of conical projections (12) in the opposite direction towards the liquid inlet.

3. Liquid filter according to Claim 1, characterized in that the wound filter webs (1, 2) are provided at one end with a cover plate (3) which has, over the windings (4), inlet orifices (31) for the liquid, and forms a liquid-tight connection with the outer edge regions (41) of the windings (4) and with the core (5) projecting beyond the windings (4), in the support regions (51) of the said core.

4. Liquid filter according to Claims 1 and 2, characterized in that the windings (4) connected to the cover plate (3) are inserted into a filter housing (6), and that the cover plate (3) forms a liquid-tight connection with the filter housing (6), with formation of orifices (63, 64) for entrance of the liquid and emergence of the liquid.

5. Liquid filter according to Claim 4, characterized in that the cover plate (3) and the filter housing (6) are formed from weldable plastic.

6. Liquid filter according to Claims 4 and 5, characterized in that a tube sleeve (67) which is open to the outside on one side is formed in the filter housing (6), a filter heater (7) having a heating element connection (71) being inserted from the outside into the internal cross-section of the said tube sleeve.

## Revendications

1. Un filtre pour liquides, avec un corps (6) composé de deux lés filtrants (1, 2) assemblés ensemble et enroulés sur un noyau (5) en forme de bobine, le lé inférieur (1) étant doté de parties creuses en forme de striures (11, 12) dirigées dans le sens transversal, tandis que le lé supérieur (2) est appliqué sur le lé filtrant inférieur (1), pour composer une bande filtrante en forme de vé, enroulée et ouverte d'un côté pour assurer l'entrée du liquide, le filtre à liquides composé de cette manière étant fixé partiellement dans des zones (41, 51) de la paroi intérieure du corps de filtre (6). Ce filtre à liquides est caractérisé par le fait que les creux en forme de striures (11, 12) se terminent à une distance définie (A) des bords (15, 16) du lé filtrant inférieur (1), en formant des bandes marginales planes, c.-à-d. non striées (13, 14); caractérisé par le fait que la bande marginale (13) du lé filtrant inférieur (1) opposée à l'entrée du liquide et dirigée dans le sens longitudinal est revêtue en haut d'une matière collante, qui sert à effectuer un collage continu avec la partie marginale afférente (23) du lé filtrant supérieur (2); caractérisé par le fait que la matière collante appliquée dans le sens longitudinal sur la partie inférieure (21) du bord (22), à l'extérieur du lé filtrant supérieur (2) et opposée au lé filtrant inférieur (1), est disposée de manière telle que, lors du bobinage des deux lés filtrants (1, 2), elle réalise un collage continu et décalé de 180° sur les bandes marginales (13, 21).

2. Un filtre à liquides selon la revendication 1, caractérisé par le fait que les creux en forme de striures (11, 12) - partant d'un niveau zéro au milieu (M) du lé filtrant inférieur (1) - se dirigent sous la forme d'empreintes coniques (11) en direction des lés filtrants inférieur et supérieur disposés l'un à côté de l'autre et collés ensemble (1, 2), ainsi que sous la forme de bossages coniques (12) dans le sens opposé, vers l'entrée du liquide.

3. Un filtre à liquides selon la revendication 1, caractérisé par le fait que les lés filtrants (1, 2) bobinés reçoivent une plaque de recouvrement (3) sur une extrémité frontale, cette plaque possédant des orifices de pénétration du liquide (31) au-dessus des spires (4) et étant reliés avec les parties marginales extérieures (41) des spires (4) ainsi qu'avec le noyau (5) venant en saillie au-dessus des spires (4), dont les parties portantes (51) sont étanches aux liquides.

4. Un filtre à liquides selon les revendications 1 et 2, caractérisé par le fait que les spires (4) reliées avec la plaque de recouvrement (4) sont logées dans un corps de filtre (6) et que la dite plaque de recouvrement (3) et le corps du filtre (6) sont assemblés de manière étanche, mais en formant des orifices (63, 64) permettant l'entrée et la sortie du liquide.

5. Un filtre à liquides selon la revendication 4, caractérisé par le fait que la plaque de recouvrement (3) et le corps du filtre (6) sont moulés en matière plastique soudable.

6. Un filtre à liquides selon les revendications 4 et 5, caractérisé par le fait qu'une douille tubulaire (67) ouverte d'un seul côté - vers l'extérieur - est moulée à l'intérieur du corps de filtre (6) et dans la section de passage de laquelle on introduit, de l'extérieur, un chauffage (7) du filtre, avec possibilité de branchement de la résistance de chauffage (71).

Fig. 1

EP 0 198 164 B1

Fig. 2

*Fig. 3*

Fig. 4

EP 0 198 164 B1

Fig. 5

52

6

7

67

69

71   68